(19) Europäisches Patentamt
European Patent Office
Office européen des brevets

(11) **EP 3 227 159 B1**

(12) **EUROPÄISCHE PATENTSCHRIFT**

(45) Veröffentlichungstag und Bekanntmachung des Hinweises auf die Patenterteilung:
**05.12.2018   Patentblatt 2018/49**

(21) Anmeldenummer: **15793679.0**

(22) Anmeldetag: **08.10.2015**

(51) Int Cl.:
**B61L 25/02** *(2006.01)*      **B61L 23/04** *(2006.01)*

(86) Internationale Anmeldenummer:
**PCT/AT2015/050250**

(87) Internationale Veröffentlichungsnummer:
**WO 2016/086249 (09.06.2016 Gazette 2016/23)**

(54) **VERFAHREN ZUR BESTIMMUNG DER POSITION EINES FAHRZEUGS**

METHOD FOR DETERMINING THE POSITION OF A VEHICLE

PROCÉDÉ PERMETTANT DE DÉTERMINER LA POSITION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2014   AT 508862014**

(43) Veröffentlichungstag der Anmeldung:
**11.10.2017   Patentblatt 2017/41**

(73) Patentinhaber: **AIT Austrian Institute of Technology GmbH**
**1220 Wien (AT)**

(72) Erfinder:
• **ZINNER, Christian**
**1220 Wien (AT)**

• **POINTNER, Wolfgang**
**4020 Linz (AT)**
• **KADIOFSKY, Thomas**
**3800 Göpfritz (AT)**
• **WEICHSELBAUM, Johann**
**1210 Wien (AT)**
• **RÖSSLER, Robert**
**1050 Wien (AT)**

(74) Vertreter: **Wildhack & Jellinek**
**Patentanwälte**
**Landstraßer Hauptstraße 50**
**1030 Wien (AT)**

(56) Entgegenhaltungen:
**US-B1- 6 374 184**

**Beschreibung**

Die Erfindung betrifft ein Verfahren zur Bestimmung der Position eines an ein Netz gebundenen Fahrzeugs. Bei einem solchen Fahrzeug handelt es sich beispielsweise um ein Schienenfahrzeug, wie etwa einen Personen- oder Güterzug oder um ein oberleitungsgebundenes Fahrzeug, wie eine Straßenbahn oder einen O-Bus. Hintergrund der Erfindung ist die Lokalisierung von Schienenfahrzeugen oder oberleitungsgebundenen Fahrzeugen auf einem an sich bekannten Netz von möglichen Pfaden. Ein weiterer Hintergrund der Erfindung ist die Erkennung des künftigen Fahrtwegs eines netzgebundenen Fahrzeugs sowie die Bestimmung von Gegenständen, die sich im künftigen Fahrtweg eines solchen Fahrzeugs befinden.

Aus dem Stand der Technik sind unterschiedliche Verfahren bekannt, mit denen die Position eines Fahrzeugs allgemein bestimmt werden kann. Weiters sind aus dem Stand der Technik auch Verfahren bekannt, mit denen Objekte erkannt werden können, die sich innerhalb eines bestimmten Bereichs bezogen auf das Fahrzeug befinden. Alle diese Verfahren sind insbesondere bei gekrümmten Fahrtwegverläufen von Schienenfahrzeugen mit gewissen Unsicherheiten behaftet, die eine zielgerichtete Erkennung von Gegenständen im Fahrtweg eines Fahrzeugs erschweren.

Beispielsweise offenbart US 6,374,184 B1 eine Vorrichtung, die für ein Fahrzeug die Wahrscheinlichkeit bestimmt, mit der ein bestimmter Weg eingeschlagen wurde.Erste Aufgabe der Erfindung ist es daher, die Position eines schienengebundenen Fahrzeugs auf einem Streckennetz möglichst sicher und fehlerfrei zu bestimmen. Ein weiteres Ziel der Erfindung ist es, den künftigen Fahrtweg eines Fahrzeugs, das sich auf einem vorgegebenen Netz befindet, sicher vorherzusagen. Eine weitere, von bevorzugten Aspekten der Erfindung zu lösende Aufgabe liegt darin, sicher Objekte zu detektieren, die sich im künftigen Fahrtweg des schienengebundenen Fahrzeugs befinden.

Die Erfindung löst die Aufgabe der genauen und sicheren Positionsbestimmung eines Fahrzeugs dadurch, dass vorab eine Datenbank zur Verfügung gestellt wird, die eine Anzahl von Netzpfaden enthält, die das Netz repräsentieren, innerhalb dessen sich das Fahrzeug bewegt,

- wobei mit diesem netzgebundenem Fahrzeug eine Fahrt vorgenommen wird und der Bewegungspfad des Fahrzeuges ermittelt wird,
- wobei der Bewegungspfad mit den in der Datenbank abgespeicherten Netzpfaden verglichen und auf Übereinstimmungen untersucht wird,
- wobei für den Fall, dass der Bewegungspfad mit einem Netzpfad aus der Datenbank zumindest teilweise übereinstimmt, dieser Netzpfad ausgewählt wird, und
- aufgrund der ermittelten Übereinstimmung der dem jeweils zuletzt aufgenommenen Punkt auf dem Bewegungspfad zugeordnete Punkt auf dem ausgewählten Netzpfad ermittelt wird und als Position des Fahrzeugs herangezogen wird

- bei fehlender Übereinstimmung eines Bewegungspfades mit den in der Datenbank abgespeicherten Netzpfaden oder bei mehrfacher Übereinstimmung eines ermittelten Bewegungspfades mit den in der Datenbank gespeicherten Netzpfaden, die für den Vergleich der Pfade herangezogene Wegstrecke solange erhöht oder verringert wird, bis eine eindeutige Übereinstimmung des Pfades mit einem einzigen in der Datenbank abgespeicherten Netzpfad vorliegt.

Ein solches Verfahren ist mit geringem Aufwand durchzuführen und auch an Positionen, beispielsweise in Tunneln oder ähnlichem möglich, wo eine Positionierung mittels GPS oder anderen satellitengebundenen Positionierungssystemen nicht möglich ist. Zudem wird ein eindeutiges Auffinden des schienengebundenen Fahrzeugs bei gleichzeitigem geringem Rechenaufwand ermöglicht.

Zur Bestimmung des künftigen Fahrtwegs eines netzgebundenen Fahrzeugs kann vorgesehen sein, dass zur Bestimmung des künftigen Fahrtweges eines netzgebundenen Fahrzeuges, eine Durchlaufrichtung in Bezug auf den Netzpfad festgelegt wird, der aufgrund der ermittelten Übereinstimmung der Durchlaufrichtung des Bewegungspfads entspricht und als künftiger Fahrtweg des Fahrzeugs ein Teilpfad des ausgewählten Netzpfads ausgewählt wird, der in Durchlaufrichtung der Position des Fahrzeugs nachfolgt.

Eine besonders einfache Bestimmung von Netzpfaden sowie zum Aufbau einer Datenbank zur Positionierung eines Fahrzeugs sieht vor, dass die Datenbank zur Verfügung gestellt wird, indem eine oder mehrere Kalibrierfahrten mit dem Fahrzeug entlang der vorgegebenen Fahrtwege innerhalb des Netzes vorgenommen werden, und dass während der Fahrt des Fahrzeugs jeweils Bewegungspfade des Fahrzeugs aufgenommen und als Netzpfade der Datenbank hinzugefügt werden.

Eine vorteilhafte Weiterbildung der Erfindung, die eine besonders einfache und wirksame Detektion von Bewegungspfaden sowie von Übereinstimmungen von Pfaden ermöglicht, sieht vor, dass bei der Ermittlung des Bewegungspfades oder Netzpfades jedem Punkt auf dem Pfad jeweils eine Orientierung des netzgebundenen Fahrzeuges, insbesondere umfassend drei die Ausrichtung des Fahrzeugs betreffende linear unabhängige Richtungsvektoren, in Bezug auf den Pfad zugeordnet wird und in der Datenbank abgespeichert wird, und insbesondere dass dem künftigen Fahrtweg die dem Netzpfad zugeordneten Orientierungsinformationen zugeordnet werden.

Eine einfache Möglichkeit zur Beschleunigung des Verfahrens der Positionsbestimmung sowie zur Verringerung des für die Positionsbestimmung aufzuwendenden Rechenaufwands sieht vor, dass sowohl bei den Kalibrierfahrten als auch bei den Fahrten jeweils eine Streckenkennung vorab vorgegeben wird, wobei die Streckenkennung den Netzpfaden der Datenbank als zusätzliches Attribut zugewiesen wird und bei der Ermittlung oder Suche des Netzpfades aus der Datenbank bzw. für den Vergleich des Netzpfades mit dem Bewegungspfad lediglich in der Datenbank befindliche Netzpfade herangezogen werden, denen dieselbe Streckenkennung zugewiesen wurde.

Um eine Georeferenzierung der ermittelten Position zu ermöglichen, kann vorgesehen sein, dass bei der Kalibrierfahrt den einzelnen Punkten auf den Netzpfaden jeweils eine geographische Lokalisierung, insbesondere in Form von Koordinaten, zugewiesen wird und dass während der Fahrt zu vorgegebenen Zeitpunkten, insbesondere bei der Aufnahme eines jeden Punkts auf dem Netzpfad, eine geographische Lokalisierung vorgenommen wird und diese dem jeweiligen Punkt auf dem Netzpfad zugewiesen wird.

Für eine zusätzliche Beschleunigung des Vergleichs zwischen dem Bewegungspfad und dem Netzpfad kann vorgesehen sein, dass während der Fahrt die geographische Position des Fahrzeugs bestimmt wird und für den Vergleich lediglich Netzpfade aus der Datenbank herangezogen werden, deren zugeordnete geographische Lokalisierungsinformation sich innerhalb einer vorgegebenen Umgebung um den während der Fahrt aufgenommenen geographischen Position befinden.

Eine zusätzliche Beschleunigung des Auffindens übereinstimmender Pfade sieht vor, dass zum Vergleich eines Bewegungspfades mit einem Netzpfad jeweils die der die zuletzt zurückgelegte Wegstrecke einer vorab vorgegebenen Länge repräsentierende Teilpfad des Bewegungspfads herangezogen wird und nur dieser Teilpfad als Bewegungspfad für den Vergleich mit den Netzpfaden herangezogen wird.

Besonders einfach kann die Aufnahme von Bewegungspfaden und Netzpfaden erfolgen, indem bei der Aufnahme von Bewegungspfaden oder Netzpfaden eine Positionsbestimmung zu diskreten Zeitpunkten erfolgt, die vorzugsweise zum jeweils nächst folgenden Zeitpunkt denselben zeitlichen Abstand haben, wobei für jeden Wegpunkt jeweils die relative Lage des jeweils nächst folgenden Wegpunktes angegeben wird.

Besonders gute Übereinstimmungen lassen sich erzielen, wenn für jeden Wegpunkt auch die relative Drehung des Fahrzeuges oder Änderung der Ausrichtung des Fahrzeuges gegenüber der Ausrichtung des Fahrzeuges im jeweils vorangehenden Weg angegeben wird.

Eine vorteilhafte Weiterbildung der Erfindung, die eine besonders robuste Art des Vergleichs anhand einer projizierten Krümmungsvektorfunktion ermöglicht, sieht vor, dass die Bewegungspfade sowie die Netzpfade in Form einer Kurvenfunktion $\mathbf{p}(s)$ bezogen auf einen Startpunkt angegeben werden,

- dass der so beschriebene Pfad gegebenenfalls auf eine vorgegebene, insbesondere horizontal verlaufende, Ebene projiziert wird,

- dass anschließend die zweite Ableitung der die Projektion darstellenden Funktion $\mathbf{p}_{xy}(s)$ nach der Strecke s als Krümmungsvektorfunktion $\mathbf{K}(s)$ ermittelt wird,

- dass aus der so ermittelten Krümmungsvektorfunktion $\mathbf{K}(s)$ gegebenenfalls eine skalare, vorzeichenbehaftete Krümmungsfunktion K(s) ermittelt wird, und

- dass zum Vergleich eines Netzpfades mit einem Bewegungspfad der Verlauf der Krümmungsvektorfunktion oder Krümmungsfunktion des Netzpfades mit dem Verlauf der Krümmungsvektorfunktion oder Krümmungsfunktion des Pfades verglichen, insbesondere korreliert wird, und

- dass diejenige Position des Netzpfades und ermittelt wird, die mit dem Bewegungspfad des Fahrzeugs am besten übereinstimmt,

- dass diese ermittelte Position der momentanen Position des netzgebundenen Fahrzeuges gleichgehalten wird und

- gegebenenfalls dass der dieser Position nachfolgende Teilpfad des aufgefundenen Netzpfades als künftiger Pfad des netzgebundenen Fahrzeuges angesehen und zur Verfügung gehalten wird.

Eine weitere Vereinfachung der Prüfung von Bewegungs- und Netzpfaden auf Übereinstimmung sieht vor, dass zu einem Zeitpunkt während der Fahrt jeder einzelne in der Datenbank abgespeicherte Netzpfad mit dem vom netzgebundenen Fahrzeug ermittelten Pfad verglichen wird, wobei derjenige Netzpfad, in dem der vom Fahrzeug zurückgelegte Pfad aufgefunden wurde für die Bestimmung der Position s des Fahrzeuges sowie für die Bestimmung des künftigen Fahrwegverlaufs des Fahrzeuges herangezogen wird, und

- dass bei weiteren nachfolgenden Bestimmungen der Position, und gegebenenfalls des künftigen Fahrtwegs, des netzgebundenen Fahrzeuges ausschließlich in diesem ausgewählten Netzpfad nach Übereinstimmungen des vom Fahrzeug zurückgelegten Bewegungspfades mit diesem Netzpfad gesucht wird, und

- dass insbesondere wobei die übrigen Netzpfade bei der Bestimmung der Position und/oder des künftigen Fahrtweges nicht mehr herangezogen werden, insbesondere solange der Bewegungspfad im ausgewählten Netzpfad aufgefunden werden kann.

Eine einfache Bestimmung der lokalen Parameter des Pfades sieht vor, dass die Bestimmung der Netzpfade sowie die Bestimmung des Bewegungspfades mittels einer Kamera erfolgt, wobei das Kamerabild einem visuellen Odometrie-Verfahren zugeführt wird, mit dem der jeweilige vom netzgebundenen Fahrzeug zurückgelegte Bewegungspfad oder Netzpfad ermittelt wird.

Eine einfache Möglichkeit zur Bestimmung der Netzpfade sieht vor, dass die Bestimmung der Netzpfade durch eine einmalig durchzuführende Extraktion und geeignete Weiterverarbeitung von Daten aus einem bereits bestehenden Kartenwerk erfolgt.

Zur wirksamen und einfachen Detektion von Objekten im künftigen Fahrtweg des Fahrzeugs kann vorgesehen sein, dass ausgehend vom netzgebundenen Fahrzeug eine Suche nach Objekten in der Umgebung des Fahrzeuges vorgenommen wird, wobei diese Suche insbesondere mittels einer stereoskopischen Mehrkameraanordnung vorgenommen wird, wobei eine Anzahl von Punkten oder Objekten in Bezug auf die Kameras erstellt wird, - wobei der in Bezug auf das Fahrzeug vorliegende, ermittelte künftige Pfad in Bezug auf die beiden Kameras ermittelt wird und nach erkannten Objekten im Bereich des künftigen Pfads gesucht wird, und bei Auffinden solcher Objekte im Bereich des künftigen Pfades eine Warnung ausgegeben wird, dass sich Hindernisse im künftigen Fahrtweg des Fahrzeuges befinden.

Vorteilhafterweise kann ein Programm zur Durchführung eines erfindungsgemäßen Verfahrens auf einem Datenträger abgespeichert werden.

Die Erfindung wird im Folgenden anhand eines nicht einschränkend zu verstehenden Ausführungsbeispiels näher dargestellt.

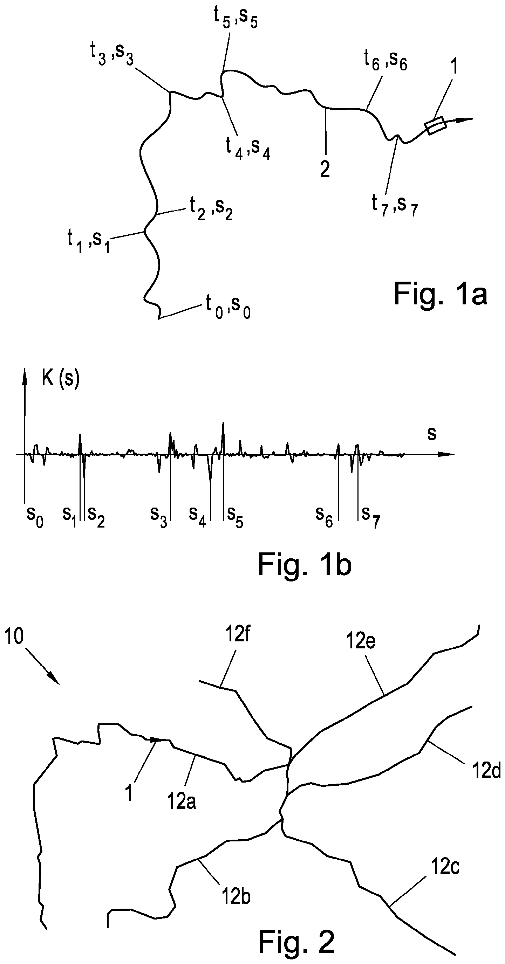

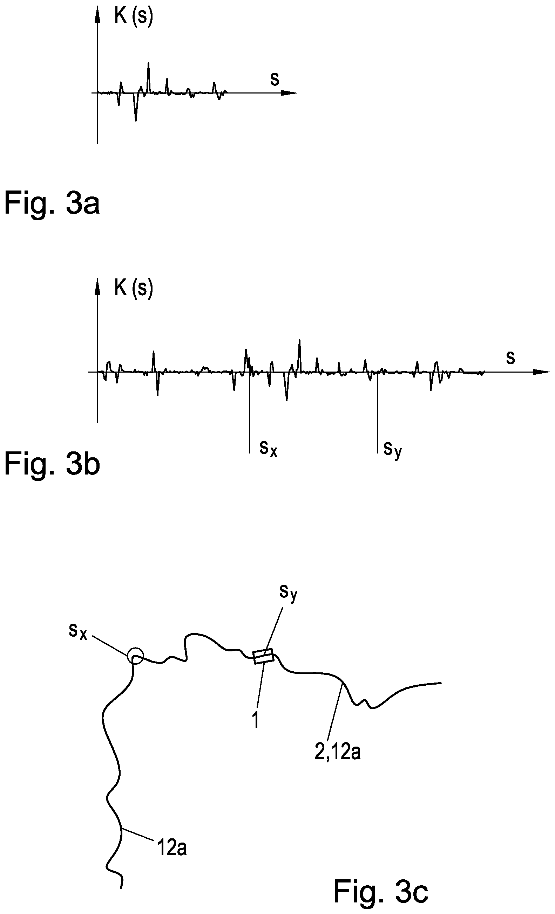

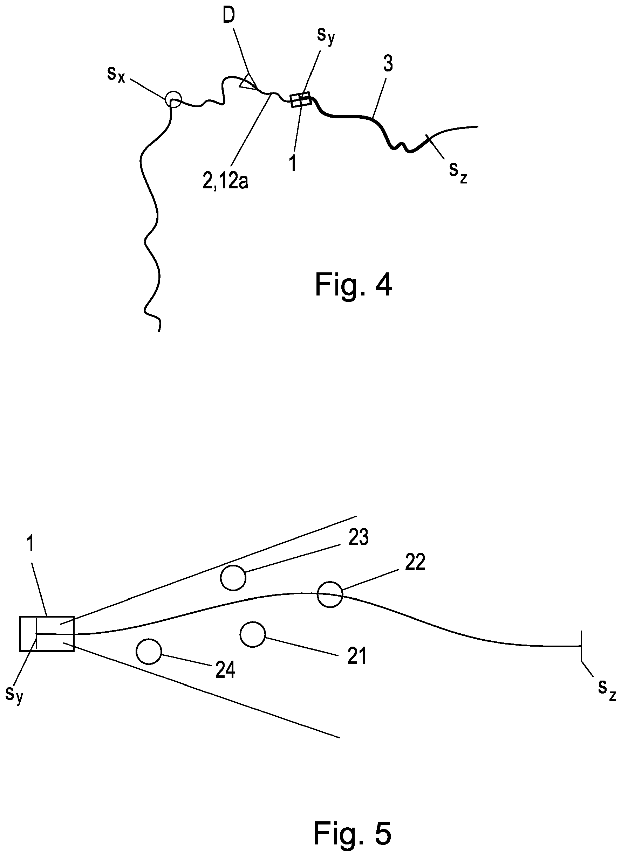

**Fig. 1a** zeigt schematisch die Aufnahme eines Bewegungspfads mittels eines Fahrzeugs. **Fig. 1b** zeigt die für den Bewegungspfad ermittelte Krümmungsfunktion. **Fig. 2** zeigt ein Netz umfassend eine Anzahl von Netzpfaden, die jeweils Schienen für ein Fahrzeug darstellen. **Fig. 3a und 3b** zeigen schematisch die Prüfung auf Übereinstimmung zwischen einem Bewegungspfad und einem Netzpfad. **Fig. 3c** zeigt die Position des Fahrzeugs im Netz. **Fig. 4** zeigt die Ermittlung des künftigen Fahrtwegs. **Fig. 5** zeigt eine mögliche Objekterkennung ausgehend basierend auf einem erfindungsgemäß ermittelten künftigen Fahrtwegs.

**Positionsbestimmung allgemein**

Um die Position des Fahrzeugs 1 zu finden, werden die im Folgenden dargestellten Schritte hintereinander durchgeführt.

In diesem Zusammenhang bedeutet der Begriff Pfad eine datenmäßige Repräsentation einer tatsächlichen in der realen Welt bestehenden Wegstrecke. Ein Pfad kann auf unterschiedliche Weise angegeben werden, beispielsweise durch eine Anzahl von Koordinaten von auf der jeweils repräsentierten Strecke liegenden Punkten. Unter einem Netz wird eine Anzahl von Pfaden verstanden, die untereinander zusammenhängen können.

Dieses Ausführungsbeispiel umfasst die Ermittlung des vom Fahrzeug 1 zurückgelegten Pfads, im Folgenden als Bewegungspfad 2 bezeichnet, das Zurverfügungstellen einer Datenbank bestehender Pfade, im Folgenden als Netzpfade 12a, 12b, ... (Fig. 2) bezeichnet, sowie einen Vergleich eines Bewegungspfads 2 mit einer Anzahl von Netzpfaden 12a, 12b, ... aus der Datenbank. Aufgrund des Vergleichs können Übereinstimmung ermittelt und die Position des Fahrzeugs 1 im Netz 10 gefunden werden.

**Ermittlung und Verarbeitung von Bewegungspfaden**

In **Fig. 1a** wird ein Bewegungspfad 2 dargestellt, der vom Fahrzeug 1 abgefahren wird. Der Bewegungspfad 2 des Fahrzeugs 1 kann konkret auf unterschiedliche Weise ermittelt werden, wobei die Ermittlung des Bewegungspfads 2 mittels visueller Odometrie besonders vorteilhaft ist.

Hierbei wird während der Fahrt entlang einer Schienenstrecke innerhalb eines bekannten Streckennetzens ein visuelles Odometrieverfahren auf Basis eines Stereokamerasystems angewendet. Eine mögliche Implementierung des Verfahrens wird unter (Nister et al., Visual Odometry, CVPR, 2004) näher erläutert. Bei diesem Verfahren werden die auf Basis von Stereo-Kamerabildern, die mittels auf dem Fahrzeug 1 befindlichen Kameras aufgenommen wurden, Disparitäten aufgrund korrespondierender Bildmerkmale ermittelt. Aufgrund dieser Disparitäten wird die dreidimensionale Position einzelner Objektpunkte in Relation zum Kamerasystem und damit zum Fahrzeug bestimmt. Mittels Korrespondenzbildung innerhalb aufeinanderfolgender Bildpaare wird ermittelt wie sich die Position wiedererkannter Objektpunkte verändert hat. Daraus kann im Umkehrschluss der Fahrtweg des Fahrzeugs 1 bestimmt und als Bewegungspfad 2 dargestellt werden.

In dem in **Fig. 1a** dargestellten Beispiel bewegt sich das Fahrzeug 1 entlang einer Schienenstrecke und befindet sich zum Zeitpunkt $t_0$ am Wegpunkt $s_0$, zum Zeitpunkt $t_1$ nach Zurücklegen einer Wegstrecke $s_1$ usw. Der Bewegungspfad 2 des Fahrzeugs 1 kann in Form einer Kurvenfunktion $p(s)$ dargestellt werden, die die jeweilige Position des Fahrzeugs 1 jeweils in Abhängigkeit von der zurückgelegten Wegstrecke s angibt. Auch wenn die Kurvenfunktion $p(s)$ grundsätzlich auch in Abhängigkeit von der Zeit t angegeben werden könnte, hat die Darstellung in Abhängigkeit von der zurückgelegten Wegstrecke s den Vorteil, dass der Vergleich von Bewegungspfaden 2 und Netzpfaden 12a, 12b ohne Angabe der jeweiligen Geschwindigkeit vorgenommen werden kann.

Die Kurvenfunktion $p(s)$ umfassend die identifizierten Bewegungsdaten des Fahrzeugs 1 liegen grundsätzlich in Form von dreidimensionalen Daten vor. Diese Daten werden bei diesem Ausführungsbeispiel der Erfindung auf eine lokale, insbesondere horizontale, Referenzebene projiziert auf die sich die zuletzt bekannte Position und Orientierung des Fahrzeugs bezieht. Mit Hilfe dieses Schritts werden Drift-Effekte in vertikaler Richtung die sich durch unvermeidliche Ungenauigkeiten bei der Bestimmung der einzelnen Bewegungsvektoren ergeben können eliminiert. Auf diese Weise wird aufgrund der dadurch resultierenden und aneinander gereihten Bewegungsinkremente ein korrigierter Fahrwegverlauf ermittelt.

Während der Fortbewegung des Fahrzeugs 1 wird fortlaufend eine Metrik berechnet, die als Basis für die spätere Lokalisierung dient. Im vorliegenden Ausführungsbeispiel handelt es sich dabei um die die lokale Krümmung K des Fahrwegs in Relation zum Weg s. Konkret wird dazu ein kurzer Streckenabschnitt von einigen Metern in das Referenzkoordinatensystem der letzten bekannten Fahrzeugposition $s_i$ transformiert. Die sich dadurch ergebenden Abweichungen $y_i(s)$ in Richtung der lokalen lateralen Fahrzeugachse werden mittels einer Polynomfunktion $q_i(s)$ angenähert, deren Krümmungsfaktor dann als Metrik für den entsprechenden Streckenabschnitt herangezogen wird. Diese Methode wird wiederholt, sobald sich das Fahrzeug um ein gewisses Weginkrement weiterbewegt. Aufgrund der Tatsache, dass eine lokale Ausrichtung des Streckenabschnitts erfolgt können orientierungsbedingte Abhängigkeiten des Verfahrens vermieden werden. Aus den einzelnen ermittelten lokalen Krümmungen K kann über den Bewegungspfad 2 ein Krümmungsverlauf K(s) erstellt werden. Beispielhaft kann der Krümmungsverlauf $K(s_i)$ aus der Polynomfunktion $q_i$ durch die folgende Vorschrift ermittelt werden:

$$K(s_i) = -d^2 q_i \, / \, ds^2 \, (s_i)$$

In **Fig. 1b** ist der Krümmungsverlauf K(s) angegeben, der für jeden Wegpunkt auf dem Bewegungspfad 2 des Fahrzeugs 1 auch die relative Drehung des Fahrzeugs 1 oder Änderung der Ausrichtung des Fahrzeugs 1 gegenüber der Ausrichtung des Fahrzeugs 1 im jeweils vorangehenden Bewegungspfad 12a angibt. So ist beispielsweise zu erkennen, dass das Fahrzeug 1 zum Wegpunkt $s_3$ eine stärkere Rechtsdrehung vollführt, der Krümmungsverlauf $K(s_3)$ weist dementsprechend einen positiven Ausschlag. Entsprechend dreht das Fahrzeug 1 zum Wegpunkt $s_4$ nach links. Aus **Fig. 1b** lässt sich ein negativer Ausschlag im Krümmungsverlauf K(s) erkennen. Auf diese Weise lässt sich für jeden vom Fahrzeug 1 durchfahrenen Bewegungspfad 2 ein charakteristisches Profil in Form des Krümmungsverlaufs K(s) ermitteln, das von anderen ebenfalls vom Fahrzeug 1 durchfahrenen Bewegungspfaden 2 oder Netzpfaden 12a, 12b unterscheidbar ist. Aufgrund dieses charakteristischen Profils, dargestellt durch den Krümmungsverlauf K(s), ist es möglich, einen bei der Bewegung eines Fahrzeugs 1 durchlaufenen Bewegungspfad 2 mit einer Vielzahl von zuvor ermittelten oder durchfahrenen Netzpfaden 12a, 12b, ... zu vergleichen.

**Datenbank von Netzpfaden**

**Fig. 2** zeigt schematisch ein Netz 10 umfassend eine Anzahl von Netzpfaden 12a, 12b, ..., auf denen Fahrzeuge 1 verkehren können. Die einzelnen Netzpfade 12a, 12b, ... des Netzes 10 sind in einer Datenbank abgespeichert. Diese Datenbank kann auf unterschiedliche Art erstellt werden.

Eine Möglichkeit besteht darin, die Netzpfade 12a, 12b, ... mittels des vorstehend beschriebenen Verfahrens analog dem Bewegungspfad 2 zu ermitteln, wobei für jeden Netzpfad 12a, 12b, ... jeweils eine Krümmungsfunktion oder Krümmungsvektorfunktion zur Verfügung steht. Die Datenbank wird zur Verfügung gestellt, indem eine oder mehrere Kalibrierfahrten mit dem Fahrzeug 1 entlang der vorgegebenen Fahrtwege innerhalb des Streckennetzes vorgenommen werden. Während der Fahrt des Fahrzeugs 1 werden jeweils die Pfade des Fahrzeugs aufgenommen. Diese stehen als Kurvenfunktion **p**(s) zur Verfügung.

Eine weitere Möglichkeit besteht darin, bestehende Vermessungsdaten bestehender Fahrtwege des Streckennetzes als Netzpfade 12a, 12b, ... in die Datenbank einzuspeisen. Solche Vermessungsdaten stehen regelmäßig als Folge von Koordinatenwerten zur Verfügung, die der Kurvenfunktion **p**(s) entsprechen.

Entsprechend dem vorstehend beschriebenen Vorgehen werden bei beiden Vorgehensweisen aus der Kurvenfunktion **p**(s) die Krümmungsfunktion oder die Krümmungsvektorfunktion ermittelt. Die Krümmungsfunktion oder Krümmungsvektorfunktion wird dem jeweiligen Netzpfad 12a, 12b zugeordnet und der Datenbank hinzugefügt.

Für das nachstehend dargestellte Verfahren zur Bestimmung der Position eines Fahrzeugs 1 ist es lediglich erforderlich, dass eine solche Datenbank mit Netzpfaden zur Verfügung steht, unabhängig davon, wie die einzelnen Netzpfade 12a, 12b ermittelt wurden. Es ist nicht erforderlich, dass die konkrete Art des Zusammenhangs der einzelnen Netzpfade 12a, 12b nicht notwendigerweise in der Datenbank abgespeichert ist.

**Vergleich von Pfaden und Positionsbestimmung**

Eine vorteilhafte Möglichkeit zur Lokalisierung von ermittelten Bewegungspfaden 2 in Netzpfaden 12a, 12b, ... ist im Zusammenhang mit **Fig. 3a und 3b** näher dargestellt.

Für den im Folgenden dargestellten Vergleich von Bewegungspfaden 2 und Netzpfaden 12a, 12b, ... wird der Verlauf der Krümmungsvektorfunktion **K**(s) oder Krümmungsfunktion K(s) des jeweiligen Netzpfades 12a, 12b mit dem Verlauf der Krümmungsvektorfunktion **K**(s) oder Krümmungsfunktion K(s) des Bewegungspfades 2 verglichen, insbesondere korreliert.

Mit Hilfe eines Mustererkennungsverfahrens aus der Signalverarbeitung wird bestimmt, ob und an welcher Position innerhalb der Netzpfade 12a, 12b, ... des Netzes eine Übereinstimmung mit dem Bewegungspfad 2 besteht. Dieses Verfahren, welches auf der mathematischen Methode der normierten Kreuzkorrelation beruht, ist beispielsweise in der freien Programmbibliothek OpenCV implementiert und wird dokumentiert unter: *http://docs.opencv.org/modules/imgproc/doc/object_detection.html?highlight=matchtempla te#matchtemplate (OpenCV- Object detection).*

Für den Bewegungspfad 2 (**Fig. 3a**) sowie für jeden der Netzpfade 12a, 12b, ... (**Fig. 3b**) liegt jeweils eine Krümmungsvektorfunktion **K**(s) oder Krümmungsfunktion K(s) vor. Für den Fall, dass der Bewegungspfad 2 mit einem Netzpfad 12a, 12b, ... aus der Datenbank zumindest teilweise übereinstimmt, wird dieser Netzpfad 12a zur weiteren Lokalisierung der Position des Fahrzeugs 1 ausgewählt.

Anschließend wird mit Hilfe des Mustererkennungsverfahrens ermittelt, an welcher Position die miteinander übereinstimmenden Bereiche des Bewegungspfads 2 und des ausgewählten Netzpfads 12a miteinander übereinstimmen. Diejenige Position, für die die jeweilige Übereinstimmung maximal ist, wird als momentane Position des Fahrzeugs 1 angesehen. Im vorliegenden Fall stimmt der aufgenommene Bewegungspfad 2 des Fahrzeugs 1 am besten mit dem Streckenbereich zwischen $s_x$ und $s_y$ des ausgewählten Netzpfads 12a überein. Die Positionen $s_x$ und $s_y$ des Beginns und des Endes des Bewegungspfads sind in **Fig. 3c** in Bezug auf den ausgewählten Netzpfad 12a dargestellt. Aufgrund der ermittelten Übereinstimmung wird der dem jeweils zuletzt aufgenommenen Punktes auf dem Bewegungspfad 2 zugeordnete Punkt auf dem ausgewählten Netzpfad 12a ermittelt wird und als Position $s_y$ des Fahrzeugs 1 herangezogen.

Bei der Lokalisierung der aktuellen Fahrzeugposition innerhalb eines Streckennetzes oder auch einer einzelnen Fahrtstrecke kann es zu Mehrdeutigkeiten bei der Bestimmung der optimalen Übereinstimmungsposition kommen. Aus diesem Grund kann der Übereinstimmungsbereich des zuletzt zurückgelegten Streckenabschnitts sukzessive erhöht werden um dadurch eine eindeutige Positionsbestimmung zu erreichen. Sollte dies aus irgendwelchen Gründen nicht ausreichend sein um Mehrdeutigkeiten zu vermeiden können auch Filtermethoden zum Einsatz kommen, die sich auf die Konsistenz aufeinander folgender Lokalisierungsschritte beziehen. Sollte das Fahrzeug dabei Bewegungen, wie beispielswese Sprünge, durchführen die nicht als plausibel erscheinen werden diese Lokalisierungshypothesen verworfen. Die verbleibende optimale Lösung für die aktuelle Position des Fahrzeugs 1 wird in weiterer Folge herangezogen um den dem Fahrzeug 1 vorausliegenden Streckenverlauf zu bestimmen.

Für den Vergleich braucht nicht der gesamte Bewegungspfad des Fahrzeugs 1 herangezogen werden. Vielmehr reicht es aus, dass zum Vergleich eines Bewegungspfades 2 mit einem Netzpfad 12a, 12b vom Bewegungspfad 2 jeweils die zuletzt zurückgelegte Wegstrecke einer vorab vorgegebenen Länge herangezogen wird und diese für den Vergleich mit den Netzpfaden 12a, 12b herangezogen wird.

Bei der vorliegenden Ausführungsform der Erfindung ist zur Ersparnis von Rechenzeit vorgesehen, dass zu einem Zeitpunkt während der Fahrt jeder einzelne in der Datenbank abgespeicherte Netzpfad mit dem vom Fahrzeug 1 ermittelten Bewegungspfad 2 verglichen wird, wobei derjenige Netzpfad 12a, in dem der vom Fahrzeug 1 zurückgelegte Bewegungspfad 2 aufgefunden wurde für die Bestimmung der Position s des Fahrzeuges herangezogen wird.

Ist bereits ein Netzpfad 12a erfolgreich als übereinstimmend mit dem Bewegungspfad 2 identifiziert worden, braucht bei den nachfolgenden Bestimmungen der Position des netzgebundenen Fahrzeugs 1 nur noch in diesem ausgewählten Netzpfad 12a nach Übereinstimmungen des vom Fahrzeug 1 zurückgelegten Bewegungspfad 2 mit diesem Netzpfad 12a gesucht werden. Die übrigen Netzpfade 12b, ... brauchen bei der Bestimmung des der Position des Fahrzeugs so lange nicht mehr herangezogen werden, bis der Bewegungspfad mit den ausgewählten Netzpfad nicht mehr übereinstimmt.

## Künftiger Fahrtweg

Um mögliche Hindernisse für ein Fahrzeug 1 wirksam detektieren zu können, ist es von Vorteil, den künftigen Fahrtweg 3 des Fahrzeugs 1 zu kennen. Während Verfahren nach dem Stand der Technik den künftigen Fahrtweg 3 unmittelbar aus den auf dem Fahrzeug 1 ermittelten Bildern extrahieren, kann der künftige Fahrtweg 3 des Fahrzeugs 1 auf Netzpfaden 12a, 12b, ..., bei denen keine Kreuzungen vorhanden sind ohne weiteres aufgrund der Lage der zur Verfügung stehenden Netzpfade 12a, 12b, ... ermittelt werden. Sofern bei einer Wegkreuzung oder Weiche mehrere Möglichkeiten zur Verfügung stehen, können sicherheitshalber mehrere künftige Netzpfade 12a, 12b, ... auf das Vorhandensein von Hindernissen untersucht werden. Alternativ kann auch bei Kenntnis des tatsächlich gewählten künftigen Netzpfads 12a, 12b, ... nur dieser auf Objekte untersucht werden.

Zur Bestimmung des künftigen Fahrtweges 3 eines Fahrzeuges 1 wird in Bezug auf den ausgewählten Netzpfad 12a eine Durchlaufrichtung D, dargestellt als Pfeil, (**Fig. 4a**) festgelegt wird, der aufgrund der ermittelten Übereinstimmung der Durchlaufrichtung D des Bewegungspfads 2 entspricht. Als künftiger Fahrtweg 3 des Fahrzeugs 1 wird ein Teilpfad 3 des ausgewählten Netzpfads 12a ausgewählt, der in Durchlaufrichtung D der Position $s_y$ des Fahrzeugs 1 nachfolgt. Dieser der Position $s_y$ des Fahrzeugs 1 nachfolgende Teilpfad 3 des ausgewählten Netzpfades 12a kann als künftiger Pfad 3 des Fahrzeugs 1 angesehen und zur Verfügung gehalten werden.

## Objekterkennung im künftigen Fahrtweg

**Fig. 5** zeigt den Bereich um den künftigen Fahrtweg des Schienenfahrzeugs im Detail. Die Identifikation des zukünftigen Streckenverlaufs basiert darauf, dass sowohl die Position als auch die Orientierung, umfassend Fortbewegungsrichtung und allenfalls Neigungen, des Fahrzeugs 1 innerhalb eines bestimmten Streckenabschnitts bekannt sind. Nachdem die Position $s_y$ mit Hilfe des beschriebenen Korrelationsverfahrens und unter Zuhilfenahme verschiedener Filtermethoden eindeutig bestimmt wurde wird nun die Ausrichtung des Fahrzeugs in Relation zum Streckenverlauf bestimmt.

Dies ist möglich indem mit Hilfe eines zweidimensionalen Matching-Verfahrens die Ausrichtung eines kurzen Abschnitts am Ende des bereits zurückgelegten Fahrtweges an den dazu korrespondierenden Abschnitt des gespeicherten Netzpfads 12a, in dem dieser lokalisiert wurde, angeglichen wird. Dabei wird die Methode der kleinsten Quadrate angewendet, um jene räumliche Transformation x zu bestimmen, welche notwendig ist, die folgenden bekannten Wegpunkte aus dem Netzpfad in das lokale Koordinatensystem des Fahrzeugs zu transformieren. Indem nicht nur die Orientierungen der identifizierten Lokalisierungspunkte abgeglichen werden, sondern ein best-Fit Matching über ein kurzes Wegstück angewendet wird, können geringfügige Abweichungen der aktuellen Ausrichtung des Fahrzeugs 1 im Vergleich zur Ausrichtung des Netzpfads identifiziert werden. Insbesondere für eine Objekt- und Hinderniserkennung ist die Kenntnis der konkreten Ausrichtung des künftigen Fahrtweges 3 in Relation zu dem am Fahrzeug angebrachten Kamerasystem relevant.

Ausgehend vom Fahrzeug 1 wird eine Suche nach Objekten 21, 22, 23, 24 in der Umgebung des Fahrzeuges 1 vorgenommen wird. Diese Suche kann insbesondere mittels einer stereoskopischen Mehrkameraanordnung vorgenommen werden. Eine Anzahl von Objekten 21, 22, 23, 24 wird in diesem Bereich erkannt und zum künftigen Fahrtweg 3 in Relation gesetzt.

Wie in **Fig. 5** dargestellt, befinden sich im Bereich des Fahrzeugs einige Objekte 21, 22, 23, 24. Aufgrund der Kenntnis der Lage des Fahrtwegs 1 ($s_y$, ..., $s_z$) relativ zum Fahrzeug 1 bzw. relativ zu den auf dem Fahrzeug 1 angeordneten Objekterkennungseinrichtungen kann festgestellt werden, welches der Objekte 21, 22, 23, 24 sich im künftigen Fahrtweg 3 des Fahrzeugs 1 befindet. Auf diese Weise kann festgestellt werden, dass das Objekt 22 ein Hindernis für das Fahrzeug 1 darstellt, während die übrigen Objekte 21, 23, 24 sich außerhalb des künftigen Fahrtwegs 3 befinden. Allenfalls kann aufgrund einer Bewegungsanalyse der Objekte 21, 22, 23, 24 zusätzlich noch festgestellt werden, welche der Objekte 21, 22, 23, 24 sich auf den künftigen Fahrtweg 3 des Fahrzeugs 1 zu bewegen und ob Kollisionen drohen.

Bei Auffinden solcher Objekte im Bereich des künftigen Fahrtweg 3 wird eine Warnung ausgegeben, dass sich Hindernisse 22 im künftigen Fahrtweg 3 des Fahrzeuges 1 befinden.

## Weitere Verbesserungen durch Geolokalisation und Attributvergabe

Die Datenbank der vorliegenden Ausführungsform der Erfindung kann verbessert werden, indem den einzelnen Netzpfaden 12a, 12b, ... Geo-Lokalisationsdaten und/oder Netzpfadattribute zugewiesen werden. Mit Geo-Lokalisationsdaten können einzelne Punkte der Netzpfade 12a, 12b, ... eindeutig in Bezug auf Erdoberfläche festgelegt werden. Die Zuordnung von Netzpfadattributen ermöglicht eine eindeutige Identifikation von Netzpfaden 12a, 12b, ....

Den Netzpfaden 12a, 12b, ... der Datenbank wird jeweils als zusätzliches Attribut eine Streckenkennung zugewiesen. Bei der Ermittlung oder Suche des Netzpfades 12a, 12b, ... in der Datenbank bzw. für den Vergleich des Netzpfades 12a, 12b, ... mit einem Bewegungspfad 2 werden lediglich derjenige in der Datenbank befindliche Netzpfad 12a, 12b, herangezogen, dem die jeweilige Streckenkennung zugewiesen wurde. Auf diese Weise lässt sich die Suche der Position des Fahrzeugs 1 bzw. des künftigen Fahrtwegs 3 drastisch einschränken.

Weiters kann zusätzlich oder alternativ auch eine Geolokalisation der Netzpfade 12a, 12b, ... vorgenommen werden, die bei der Detektion der Position des Fahrzeugs 1 als zusätzlicher Anhaltspunkt herangezogen wird. Bei den zur Erstellung der Netzpfade 12a, 12b, ... vorgenommenen Kalibrierfahrten wird den einzelnen Punkten auf den Netzpfaden 12a, 12b, ... jeweils eine geographische Lokalisierung zugewiesen. Alternativ ist es auch möglich, die geographische Lokalisierungsinformation auch aus anderen Quellen zu extrahieren und in die Datenbank einzufügen.

Während der Fahrt des Fahrzeugs 1 wird zu vorgegebenen Zeitpunkten, insbesondere bei der Aufnahme eines jeden Punkts auf dem Bewegungspfad 2, eine geographische Lokalisierung vorgenommen. Für den Vergleich werden lediglich Netzpfade 12a, 12b, ... aus der Datenbank herangezogen, deren zugeordnete geographische Lokalisierungsinformation sich innerhalb einer vorgegebenen Umgebung um den während der Fahrt aufgenommenen Punkt befinden. Durch diese Maßnahme kann die Anzahl der möglichen Vergleiche von Bewegungs- und Netzpfaden 2, 12a, 12b, ... drastisch eingeschränkt werden.

## Patentansprüche

1. Verfahren zur Bestimmung der Position eines an ein Netz gebundenen Fahrzeugs (1), insbesondere Schienenfahrzeuges oder oberleitungsgebundenen Fahrzeuges,

   - wobei vorab eine Datenbank zur Verfügung gestellt wird, die eine Anzahl von Netzpfaden (12a, 12b, ...) enthält, die das Netz repräsentieren, innerhalb dessen sich das Fahrzeug (1) bewegt,

- wobei mit diesem netzgebundenem Fahrzeug (1) eine Fahrt vorgenommen wird und der Bewegungspfad (2) des Fahrzeuges (1) ermittelt wird,

- wobei der Bewegungspfad (2) mit den in der Datenbank abgespeicherten Netzpfaden (12a, 12b, ...) verglichen und auf Übereinstimmungen untersucht wird,

- wobei für den Fall, dass der Bewegungspfad (2) mit einem Netzpfad (12a, 12b, ...) aus der Datenbank zumindest teilweise übereinstimmt, dieser Netzpfad (12a, 12b, ...) ausgewählt wird, und

- aufgrund der ermittelten Übereinstimmung der dem jeweils zuletzt aufgenommenen Punkt auf dem Bewegungspfad (2) zugeordnete Punkt auf dem ausgewählten Netzpfad (12a, 12b, ...) ermittelt wird und als Position des Fahrzeugs (1) herangezogen wird **dadurch gekennzeichnet, dass**

bei fehlender Übereinstimmung eines Bewegungspfades (2) mit den in der Datenbank abgespeicherten Netzpfaden (12a, 12b, ...) oder bei mehrfacher Übereinstimmung eines ermittelten Bewegungspfades (2) mit den in der Datenbank gespeicherten Netzpfaden (12a, 12b, ...), die für den Vergleich der Pfade herangezogene Wegstrecke solange erhöht oder verringert wird, bis eine eindeutige Übereinstimmung des Pfades mit einem einzigen in der Datenbank abgespeicherten Netzpfad (12a, 12b, ...) vorliegt.

2. Verfahren nach Anspruch 1, wobei zur Bestimmung des künftigen Fahrtweges (3) eines netzgebundenen Fahrzeuges (1), eine Durchlaufrichtung (D) in Bezug auf den Netzpfad (12a, 12b, ...) festgelegt wird, der aufgrund der ermittelten Übereinstimmung der Durchlaufrichtung (D) des Bewegungspfads (2) entspricht und

als künftiger Fahrtweg (3) des Fahrzeugs (1) ein Teilpfad des ausgewählten Netzpfads (12a, 12b, ...) ausgewählt wird, der in Durchlaufrichtung (D) der Position ($s_y$) des Fahrzeugs (1) nachfolgt.

3. Verfahren nach einem der vorangehenden Ansprüche, **dadurch gekennzeichnet, dass** die Datenbank zur Verfügung gestellt wird, indem eine oder mehrere Kalibrierfahrten mit dem Fahrzeug (1) entlang der vorgegebenen Fahrtwege innerhalb des Netzes vorgenommen werden, und dass während der Fahrt des Fahrzeugs (1) jeweils Bewegungspfade (2) des Fahrzeugs (1) aufgenommen und als Netzpfade (12a, 12b, ...) der Datenbank hinzugefügt werden.

4. Verfahren nach einem der vorangehenden Ansprüche, **dadurch gekennzeichnet, dass** bei der Ermittlung des Bewegungspfades (2) oder Netzpfades (12a, 12b, ...) jedem Punkt auf dem Pfad (2, 12a, 12b, ...) jeweils eine Orientierung des netzgebundenen Fahrzeuges (1), insbesondere umfassend drei die Ausrichtung des Fahrzeugs (1) betreffende linear unabhängige Richtungsvektoren, in Bezug auf den Pfad zugeordnet wird und in der Datenbank abgespeichert wird, und

insbesondere dass dem künftigen Fahrtweg (3) die dem Netzpfad (12a, 12b, ...) zugeordneten Orientierungsinformationen zugeordnet werden.

5. Verfahren nach einem der vorangehenden Ansprüche, **dadurch gekennzeichnet, dass** sowohl bei den Kalibrierfahrten als auch bei den Fahrten jeweils eine Streckenkennung vorab vorgegeben wird, wobei die Streckenkennung den Netzpfaden (12a, 12b, ...) der Datenbank als zusätzliches Attribut zugewiesen wird und bei der Ermittlung oder Suche des Netzpfades (12a, 12b, ...) aus der Datenbank bzw. für den Vergleich des Netzpfades (12a, 12b, ...) mit dem Bewegungspfad (2) lediglich in der Datenbank befindliche Netzpfade (12a, 12b, ...) herangezogen werden, denen dieselbe Streckenkennung zugewiesen wurde.

6. Verfahren nach einem der vorangehenden Ansprüche, **dadurch gekennzeichnet, dass** bei der Kalibrierfahrt den einzelnen Punkten auf den Netzpfaden (12a, 12b, ...) jeweils eine geographische Lokalisierung, insbesondere in Form von Koordinaten, zugewiesen wird und dass während der Fahrt zu vorgegebenen Zeitpunkten, insbesondere bei der Aufnahme eines jeden Punkts auf dem Netzpfad (12a, 12b, ...), eine geographische Lokalisierung vorgenommen wird und diese dem jeweiligen Punkt auf dem Netzpfad zugewiesen wird, und

- dass während der Fahrt die geographische Position des Fahrzeugs (1) bestimmt wird und für den Vergleich lediglich Netzpfade (12a, 12b, ...) aus der Datenbank herangezogen werden, deren zugeordnete geographische Lokalisierungsinformation sich innerhalb einer vorgegebenen Umgebung um den während der Fahrt aufgenommenen geographischen Position befinden.

7. Verfahren nach einem der vorangehenden Ansprüche **dadurch gekennzeichnet, dass** zum Vergleich eines Bewegungspfades (2) mit einem Netzpfad (12a, 12b, ...) jeweils die der die zuletzt zurückgelegte Wegstrecke einer vorab vorgegebenen Länge repräsentierende Teilpfad des Bewegungspfads (2) herangezogen wird und nur dieser Teilpfad als Bewegungspfad (2) für den Vergleich mit den Netzpfaden (12a, 12b, ...) herangezogen wird.

8. Verfahren nach einem der vorangehenden Ansprüche, **dadurch gekennzeichnet, dass** bei der Aufnahme von Bewegungspfaden (2) oder Netzpfaden (12a, 12b, ...) eine Positionsbestimmung zu diskreten Zeitpunkten erfolgt, die vorzugsweise zum jeweils nächst folgenden Zeitpunkt denselben zeitlichen Abstand haben, wobei für jeden Wegpunkt jeweils die relative Lage des jeweils nächst folgenden Wegpunktes angegeben wird.

9. Verfahren nach Anspruch 9, **dadurch gekennzeichnet, dass** für jeden Wegpunkt auch die relative Drehung des Fahrzeuges (1) oder Änderung der Ausrichtung des Fahrzeuges (1) gegenüber der Ausrichtung des Fahrzeuges (1) im jeweils vorangehenden Weg angegeben wird.

10. Verfahren nach einem der vorangehenden Ansprüche, **dadurch gekennzeichnet, dass** die Bewegungspfade (2) sowie die Netzpfade (12a, 12b, ...) in Form einer Kurvenfunktion $\mathbf{p}(s)$ bezogen auf einen Startpunkt angegeben werden,

   - dass der so beschriebene Pfad gegebenenfalls auf eine vorgegebene, insbesondere horizontal verlaufende, Ebene projiziert wird,
   - dass anschließend die zweite Ableitung der die Projektion darstellenden Funktion $\mathbf{p}_{xy}(s)$ nach der Strecke s als Krümmungsvektorfunktion $\mathbf{K}(s)$ ermittelt wird,
   - dass aus der so ermittelten Krümmungsvektorfunktion $\mathbf{K}(s)$ gegebenenfalls eine skalare, vorzeichenbehaftete Krümmungsfunktion K(s) ermittelt wird, und
   - dass zum Vergleich eines Netzpfades (12a, 12b, ...) mit einem Bewegungspfad (2) der Verlauf der Krümmungsvektorfunktion oder Krümmungsfunktion des Netzpfades (12a, 12b, ...) mit dem Verlauf der Krümmungsvektorfunktion oder Krümmungsfunktion des Pfades (2) verglichen, insbesondere korreliert wird, und
   - dass diejenige Position ($s_y$) des Netzpfades (12a, 12b, ...) und ermittelt wird, die mit dem Bewegungspfad (2) des Fahrzeugs (1) am besten übereinstimmt,
   - dass diese ermittelte Position ($s_y$) der momentanen Position des netzgebundenen Fahrzeuges (1) gleichgehalten wird und
   - gegebenenfalls dass der dieser Position ($s_y$) nachfolgende Teilpfad des aufgefundenen Netzpfades (12a, 12b, ...) als künftiger Pfad (3) des netzgebundenen Fahrzeuges (1) angesehen und zur Verfügung gehalten wird.

11. Verfahren nach einem der vorangehenden Ansprüche, **dadurch gekennzeichnet,**

   - **dass** zu einem Zeitpunkt während der Fahrt jeder einzelne in der Datenbank abgespeicherte Netzpfad mit dem vom netzgebundenen Fahrzeug (1) ermittelten Pfad verglichen wird, wobei derjenige Netzpfad, in dem der vom Fahrzeug (1) zurückgelegte Pfad aufgefunden wurde für die Bestimmung der Position s des Fahrzeuges (1) sowie für die Bestimmung des künftigen Fahrwegverlaufs des Fahrzeuges (1) herangezogen wird, und
   - **dass** bei weiteren nachfolgenden Bestimmungen der Position, und gegebenenfalls des künftigen Fahrtwegs (3), des netzgebundenen Fahrzeuges (1) ausschließlich in diesem ausgewählten Netzpfad (12a, 12b, ...) nach Übereinstimmungen des vom Fahrzeug (1) zurückgelegten Bewegungspfades (2) mit diesem Netzpfad (12a, 12b, ...) gesucht wird, und
   - **dass** insbesondere wobei die übrigen Netzpfade (12a, 12b, ...) bei der Bestimmung der Position und/oder des künftigen Fahrtweges (3) nicht mehr herangezogen werden, insbesondere solange der Bewegungspfad im ausgewählten Netzpfad (12a, 12b, ...) aufgefunden werden kann.

12. Verfahren nach einem der vorangehenden Ansprüche, **dadurch gekennzeichnet, dass** die Bestimmung der Netzpfade (12a, 12b, ...) sowie die Bestimmung des Bewegungspfades (2) mittels einer Kamera erfolgt, wobei das Kamerabild einem visuellen Odometrie-Verfahren zugeführt wird, mit dem der jeweilige vom netzgebundenen Fahrzeug (1) zurückgelegte Bewegungspfad (2) oder Netzpfad (12a, 12b, ...) ermittelt wird.

13. Verfahren nach einem der vorangehenden Ansprüche, **dadurch gekennzeichnet, dass** die Bestimmung der Netzpfade (12a, 12b, ...) durch eine einmalig durchzuführende Extraktion und geeignete Weiterverarbeitung von Daten aus einem bereits bestehenden Kartenwerk erfolgt.

14. Verfahren nach einem der vorangehenden Ansprüche, **dadurch gekennzeichnet, dass** ausgehend vom netzgebundenen Fahrzeug (1) eine Suche nach Objekten (21, 22, 23, 24) in der Umgebung des Fahrzeuges (1) vorgenommen wird, wobei diese Suche insbesondere mittels einer stereoskopischen Mehrkameraanordnung vorgenommen wird, wobei eine Anzahl von Punkten oder Objekten in Bezug auf die Kameras erstellt wird,

   - wobei der in Bezug auf das Fahrzeug (1) vorliegende, ermittelte künftige Pfad (3) in Bezug auf die beiden Kameras ermittelt wird und nach erkannten Objekten im Bereich des künftigen Pfads (3) gesucht wird, und bei Auffinden solcher Objekte (22) im Bereich des künftigen Pfades (3) eine Warnung ausgegeben wird, dass sich Hindernisse im künftigen Fahrtweg (3) des Fahrzeuges (1) befinden.

15. Datenträger, auf dem ein Programm gespeichert ist, das bei Ausführung auf einem Computer das Verfahren nach einem der vorangehenden Ansprüche ausführt.

**Claims**

1. Method for determining the position of a vehicle (1) which is bound to a network, in particular a rail vehicle or overhead line-bound vehicle,

    - wherein a database is made available in advance which contains a number of network paths (12a, 12b, ...), which represent the network in which the vehicle (1) moves,
    - wherein a journey is made with said network-bound vehicle (1) and the movement path (2) of the vehicle (1) is determined,
    - wherein the movement path (2) is compared with the network paths (12a, 12b, ...) saved in the database and examined for correspondences,
    - wherein in the event of the movement path (2) at least partially corresponding with a network path (12a, 12b, ...) from the database, said network path (12a, 12b, ...) is selected, and
    - on the basis of the determined correspondence, that point on the selected network path (12a, 12b, ...) which is assigned to the point recorded last on the movement path (2) is determined and is used as the position of the vehicle (1),
    **characterised in that**
    if a movement path (2) does not correspond with the network paths (12a, 12b, ...) saved in the database or if there is multiple correspondence of a determined movement path (2) with the network paths (12a, 12b, ...) saved in the database, the route used for the comparison of the paths is increased or reduced until there is a clear correspondence of the path with a single network path (12a, 12b, ...) saved in the database.

2. Method according to claim 1, wherein to determine the future driving route (3) of a network-bound vehicle (1), a throughput direction (D) relative to the network path (12a, 12b, ...) is determined which due to the determined correspondence corresponds to the throughput direction (D) of the movement path (2) and
as a future route (3) of the vehicle (1) a partial path of the selected network path (12a, 12b, ...) is selected which in throughput direction (D) follows the position ($s_y$) of the vehicle (1).

3. Method according to any of the preceding claims, **characterised in that** the database is provided **in that** one or more calibrating drives are performed with the vehicle (1) along the specified route within the network, and **in that** during the journey of the vehicle (1) movement paths (2) of the vehicle (1) are recorded and added to the database as network paths (12a, 12b, ...).

4. Method according to any of the preceding claims, **characterised in that** when determining the movement path (2) or network path (12a, 12b, ...) an orientation of the network-bound vehicle (1) relative to the path is assigned to each point on the path (2, 12a, 12b, ...), in particular comprising three linearly independent direction vectors relating to the alignment of the vehicle (1), and is saved in the database, and
in particular the orientation information assigned to the network path (12a, 12b, ...) is assigned to the future route (3).

5. Method according to any of the preceding claims, **characterised in that** for both calibrating journeys and also ordinary journeys a route identifier is defined in advance, wherein the route identifier is assigned to the network paths (12a, 12b, ...) of the database as an additional attribute and, when determining or searching for the network path (12a, 12b, ...) from the database or for the comparison of the network path (12a, 12b, ...) with the movement path (2), only network paths (12a, 12b, ...) in the database are used to which the same route identifier has been assigned.

6. Method according to any of the preceding claims, **characterised in that** during the calibrating journey a geographic localisation, in particular in the form of coordinates, is assigned to the individual points on the network paths (12a, 12b, ...) and during the journey at prespecified time points, in particular when recording each point on the network path (12a, 12b, ...), a geographic localisation is performed and the latter is assigned to the respective point on the network path, and

    - during the journey the geographic position of the vehicle (1) is determined and for the comparison only network paths (12a, 12b, ...) from the database are used, for which allocated geographic localisation information is located in a predefined area around the geographic position recorded during the journey.

7. Method according to any of the preceding claims

**characterised in that** for comparing a movement path (2) with a network path (12a, 12b, ...) respectively the partial path of the movement path (2) representing the last covered route of a previously predefined length is used and only said partial path is used as a movement path (2) for the comparison with the network path (12a, 12b, ...).

8. Method according to any of the preceding claims, **characterised in that** during the recording of movement paths (2) or network paths (12a, 12b, ...) a position is determined at discrete time points, which preferably have the same time interval at the following time point, wherein for each way point respectively the relative position of the next following way point is specified.

9. Method according to claim 9, **characterised in that** for each way point also the relative rotation of the vehicle (1) or change in the alignment of the vehicle (1) is specified relative to the alignment of the vehicle (1) in the respective preceding path.

10. Method according to any of the preceding claims, **characterised in that** the movement paths (2) and the network paths (12a, 12b, ...) are specified in the form of a curve function $\mathbf{p}(s)$ relative to a starting point,

- the thus described path is projected if necessary onto a predetermined, in particular horizontal plane,
- afterwards the second derivation of the function $\mathbf{p}_{xy}(s)$ representing the projection is determined after the route s as a curvature vector function $\mathbf{K}(s)$,
- from the thus determined curvature vector function $\mathbf{K}(s)$ if necessary a scalar, signed curvature function $K(s)$ is determined, and
- for comparing a network path (12a, 12b, ...) with a movement path (2) the path of the curvature vector function or curvature function of the network path (12a, 12b, ...) is compared with the path of the curvature vector function or curvature function of the path (2), in particular is correlated, and
- the respective position $(s_y)$ of the network path (12a, 12b, ...) is determined which best corresponds with the movement path (2) of the vehicle (1),
- said determined position $(s_y)$ of the current position of the network-bound vehicle (1) is kept the same and
- if necessary the partial path of the located network path (12a, 12b, ...) following said position $(s_y)$ is considered as the future path (3) of the network-bound vehicle (1) and is made available.

11. Method according to any of the preceding claims, **characterised in that**

- at a time point during the journey each individual network path saved in the database is compared with the path determined by the network-bound vehicle (1), wherein the network path, in which the path covered by the vehicle (1) was located, is used for determining the position s of the vehicle (1) and for determining the future route/path of the vehicle (1), and
- in further processes for determining the position, and if necessary the future route (3), of the network-bound vehicle (1) exclusively in said selected network path (12a, 12b, ...) correspondences are searched for of the movement path (2) covered by the vehicle (1) with said network path (12a, 12b, ...) and
- in particular wherein the other network paths (12a, 12b, ...) are no longer used for determining the position and/or the future route (3), in particular as long as the movement path can be found in the selected network path (12a, 12b, ...).

12. Method according to any of the preceding claims, **characterised in that** the network paths (12a, 12b, ...) and the movement path (2) are determined by means of a camera, wherein the camera image is supplied to a visual odometric process, by means of which the respective movement path (2) or network path (12a, 12b, ...) covered by the network-bound vehicle (1) is determined.

13. Method according to any of the preceding claims, **characterised in that** the network paths (12a, 12b, ...) are determined by an extraction, which is performed once, and data from an already existing map series are processed in a suitable manner.

14. Method according to any of the preceding claims, **characterised in that** on the basis of the network-bound vehicle (1) a search for objects (21, 22, 23, 24) is performed in the area around the vehicle (1), wherein said search is performed in particular by means of a stereoscopic multiple-camera arrangement, wherein a number of points or objects are generated in relation to the cameras,

- wherein the future path (3) determined in relation to the vehicle (1) is determined in relation to the two cameras and detected objects are searched for in the area of the future path (3), and if such objects (22) are found in the area of the future path (3) a warning is output that there are obstacles along the future route (3) of the vehicle (1).

**15.** Data carrier on which a program is saved, which when performed on a computer carries out the method according to any of the preceding claims.

## Revendications

**1.** Procédé pour la détermination de la position d'un véhicule (1) relié à un réseau, en particulier d'un véhicule ferroviaire ou d'un trolleybus,

- dans lequel est mise à disposition au préalable une banque de données qui contient un nombre de trajets de réseau (12a, 12b, ...) qui représentent le réseau au sein duquel le véhicule (1) se déplace,
- dans lequel avec ce véhicule (1) relié à un réseau un parcours est effectué et le trajet de déplacement (2) du véhicule (1) est déterminé,
- dans lequel le trajet de déplacement (2) est comparé avec les trajets de réseau (12a, 12b, ...) sauvegardés dans la banque de données et examiné à la recherche de concordances,
- dans lequel, pour le cas où le trajet de déplacement (2) concorde au moins en partie avec un trajet de réseau (12a, 12b, ...) issu de la banque de données, ce trajet de réseau (12a, 12b, ...) est sélectionné, et
- en raison de la concordance déterminée, le point associé au dernier point enregistré respectivement sur le trajet de déplacement (2) est déterminé sur le trajet de réseau (12a, 12b, ...) sélectionné et est pris en compte en tant que position du véhicule (1)
**caractérisé en ce que**
dans le cas d'une concordance manquante d'un trajet de déplacement (2) avec les trajets de réseau (12a, 12b, ...) sauvegardés dans la banque de données ou dans le cas d'une concordance multiple d'un trajet de déplacement (2) déterminé avec les trajets de réseau (12a, 12b, ...) sauvegardés dans la banque de données, les distances prises en compte pour la comparaison des trajets sont augmentées ou diminuées jusqu'à ce qu'une concordance univoque du trajet avec un seul trajet de réseau (12a, 12b, ...) sauvegardé dans la banque de données soit présente.

**2.** Procédé selon la revendication 1, dans lequel, pour la détermination du futur itinéraire (3) d'un véhicule (1) relié à un réseau, une direction de passage (D) est établie par rapport au trajet de réseau (12a, 12b, ...) qui correspond à la direction de passage (D) du trajet de déplacement (2) en raison de la concordance déterminée et
en tant que futur itinéraire (3) du véhicule (1), un trajet partiel du trajet de réseau (12a, 12b, ...) sélectionné est sélectionné, qui suit la position (S$_y$) du véhicule (1) dans la direction de passage (D).

**3.** Procédé selon l'une quelconque des revendications précédentes, **caractérisé en ce que** la banque de données est mise à disposition **en ce qu'**un ou plusieurs parcours d'étalonnage avec le véhicule (1) le long des itinéraires prédéfinis sont effectués au sein du réseau, et que pendant le parcours du véhicule (1) respectivement des trajets de déplacement (2) du véhicule (1) sont enregistrés et ajoutés en tant que trajets de réseau (12a, 12b, ...) à la banque de données.

**4.** Procédé selon l'une quelconque des revendications précédentes, **caractérisé en ce que**, lors de la détermination du trajet de déplacement (2) ou du trajet de réseau (12a, 12b, ...), est associée à chaque point sur le trajet (2, 12a, 12b, ...) respectivement une orientation du véhicule (1) relié à un réseau, comprenant en particulier trois vecteurs de direction indépendants de façon linéaire concernant l'orientation du véhicule (1), par rapport au trajet et sauvegardée dans la banque de données, et
en particulier que les informations d'orientation associée au trajet de réseau (12a, 12b, ...) sont associées au futur itinéraire (3).

**5.** Procédé selon l'une quelconque des revendications précédentes, **caractérisé en ce que**, aussi bien lors des parcours d'étalonnage que lors des parcours, une identification de routes est respectivement prédéfinie au préalable, dans lequel l'identification de routes est attribuée aux trajets de réseau (12a, 12b, ...) de la banque de données en tant qu'attribut supplémentaire et, dans le cas de la détermination ou de la recherche du trajet de réseau (12a, 12b, ...) à partir de la banque de données ou pour la comparaison du trajet de réseau (12a, 12b, ...) avec le trajet de déplacement (2), seuls les trajets de réseau (12a, 12b, ...) se trouvant dans la banque de données auxquels la même identification de routes a été attribuée sont pris en compte.

**6.** Procédé selon l'une quelconque des revendications précédentes, **caractérisé en ce que**, dans le cas du parcours d'étalonnage, une localisation géographique, en particulier sous forme de coordonnées, est respectivement attribuée aux points individuels sur les trajets de réseau (12a, 12b, ...) et que, pendant le parcours à des moments prédéfinis, en particulier lors de l'enregistrement de chaque point sur le trajet de réseau (12a, 12b, ...), une localisation géographique est effectuée et elle est attribuée au point respectif sur le trajet de réseau, et

- que pendant le parcours la position géographique du véhicule (1) est déterminée et pour la comparaison seuls sont pris en compte les trajets de réseau (12a, 12b, ...) issus de la banque de données dont les informations de localisation géographique associées se trouvent au sein d'un environnement prédéfini autour de la position géographique enregistrée pendant le parcours.

7. Procédé selon l'une quelconque des revendications précédentes, **caractérisé en ce que**, pour la comparaison d'un trajet de déplacement (2) avec un trajet de réseau (12a, 12b, ...), respectivement la le trajet partiel du trajet de déplacement (2) représentant la dernière distance parcourue d'une longueur prédéfinie au préalable est pris en compte et seul ce trajet partiel est pris en compte en tant que trajet de déplacement (2) pour la comparaison avec les trajets de réseau (12a, 12b, ...).

8. Procédé selon l'une quelconque des revendications précédentes, **caractérisé en ce que**, lors de l'enregistrement de trajets de déplacement (2) ou de trajets de réseau (12a, 12b, ...), il s'ensuit une détermination de position à des moments discrets, qui ont de préférence le même intervalle de temps par rapport au moment respectivement suivant, dans lequel pour chaque point de chemin respectivement la position relative du point de chemin respectivement suivant est indiquée.

9. Procédé selon la revendication 9, **caractérisé en ce que**, pour chaque point de chemin, la rotation relative du véhicule (1) ou la modification de l'orientation du véhicule (1) par rapport à l'orientation du véhicule (1) sur le chemin respectivement précédent est également indiquée.

10. Procédé selon l'une quelconque des revendications précédentes, **caractérisé en ce que** les trajets de déplacement (2) ainsi que les trajets de réseau (12a, 12b, ...) sont indiqués sous la forme d'une fonction de courbe p(s) par rapport à un point de départ,

  - que le trajet ainsi décrit est projeté le cas échéant sur un plan prédéfini, en particulier horizontal,
  - que par la suite la dérivée seconde de la fonction représentant la projection $p_{xy}$(s) par rapport à la route s est déterminée en tant que fonction vectorielle de courbure $K$(s),
  - que, à partir de la fonction vectorielle de courbure $K$(s) ainsi déterminée, le cas échéant une fonction de courbure K(s) scalaire affectée d'un signe est déterminée, et
  - que, pour la comparaison d'un trajet de réseau (12a, 12b, ...) avec un trajet de déplacement (2), le tracé de la fonction vectorielle de courbure ou de la fonction de courbure du trajet de réseau (12a, 12b, ...) est comparé, en particulier corrélé, avec le tracé de la fonction vectorielle de courbure ou de la fonction de courbure du trajet (2), et
  - que la position ($S_y$) du trajet de réseau (12a, 12b, ...) qui concorde le plus avec le trajet de déplacement (2) du véhicule (1) et est déterminée,
  - que cette position ($S_y$) déterminée de la position momentanée du véhicule (1) relié à un réseau est maintenue, et
  - le cas échéant que le trajet partiel suivant cette position ($S_y$) du trajet de réseau (12a, 12b, ...) trouvé est vu en tant que futur trajet (3) du véhicule (1) relié à un réseau et est tenu à disposition.

11. Procédé selon l'une quelconque des revendications précédentes, **caractérisé en ce**

  - **que**, à un moment pendant le parcours, chaque trajet de réseau individuel sauvegardé dans la banque de données est comparé avec le trajet déterminé par le véhicule (1) relié à un réseau, dans lequel le trajet de réseau dans lequel le trajet parcouru par le véhicule (1) a été trouvé est pris en compte pour la détermination de la position s du véhicule (1) ainsi que pour la détermination du futur tracé de route du véhicule (1), et
  - **que**, lors d'autres déterminations ultérieures de la position, et le cas échéant du futur itinéraire (3), du véhicule (1) relié à un réseau, sont recherchées exclusivement dans ce trajet de réseau (12a, 12b, ...) sélectionné des concordances du trajet de déplacement (2) parcouru par le véhicule (1) avec ce trajet de réseau (12a, 12b, ...), et
  - **qu'**en particulier dans lequel les trajets de réseau (12a, 12b, ...) restants ne sont plus pris en compte lors de la détermination de la position et/ou du futur itinéraire (3), en particulier tant que le trajet de déplacement peut être trouvé dans le trajet de réseau (12a, 12b, ...) sélectionné.

12. Procédé selon l'une quelconque des revendications précédentes, **caractérisé en ce que** la détermination des trajets de réseau (12a, 12b, ...) ainsi que la détermination du trajet de déplacement (2) s'effectuent au moyen d'une caméra, dans lequel l'image de caméra est amenée à un procédé d'odométrie visuelle avec lequel le trajet de déplacement (2) ou le trajet de réseau (12a, 12b, ...) respectif parcouru par le véhicule (1) relié à un réseau est déterminé.

13. Procédé selon l'une quelconque des revendications précédentes, **caractérisé en ce que** la détermination des trajets de réseau (12a, 12b, ...) s'effectue par le biais d'une extraction à exécuter une seule fois et d'un traitement ultérieur approprié de données issues d'un atlas existant déjà.

**14.** Procédé selon l'une quelconque des revendications précédentes, **caractérisé en ce que**, à partir du véhicule (1) relié à un réseau, une recherche d'objets (21, 22, 23, 24) dans l'environnement du véhicule (1) est effectuée, dans lequel cette recherche est effectuée en particulier au moyen d'un agencement à multiples caméras stéréoscopiques, dans lequel un nombre de points ou d'objets sont générés par rapport aux caméras,

    - dans lequel le futur trajet (3) déterminé existant par rapport au véhicule (1) est déterminé par rapport aux deux caméras et des objets connus sont recherchés dans la zone du futur trajet (3), et lors de la découverte de tels objets (22) dans la zone du futur trajet (3), une alerte que des obstacles se trouvent sur le futur itinéraire (3) du véhicule (1) est émise.

**15.** Support de données, sur lequel un programme est sauvegardé, qui exécute le procédé selon l'une quelconque des revendications précédentes lors de l'exécution sur un ordinateur.

Fig. 1a

Fig. 1b

Fig. 2

Fig. 3a

Fig. 3b

Fig. 3c

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6374184 B1

**In der Beschreibung aufgeführte Nicht-Patentliteratur**

- **NISTER et al.** *Visual Odometry, CVPR,* 2004